# EUROPÄISCHE PATENTANMELDUNG

(11) **EP 1 733 929 A2**
(43) Veröffentlichungstag der Anmeldung: **20.12.2006**
(21) Anmeldenummer: 06008729.3
(22) Anmeldetag: 27.04.2006
(51) Int. Cl.: B60R 21/02

(54) **Direktintegration der steckseitigen Schnittstelle in die Gasgeneratorgeometrie**

(30) Priorität: 15.06.2005 DE 102005027539; 24.12.2005 DE 102005062329
(71) Anmelder: Hirschmann Automotive GmbH, 6830 Rankweil-Brederis (AT)
(72) Erfinder: Schmid, Günther, 6832 Röthis (AT); Mähr, Manfred, 6832 Röthis (AT)
(74) Vertreter: Thul, Hermann

(57) **Zusammenfassung**

Die Erfindung betrifft einen Gasgenerator mit einer Anzündeinheit (1), einer Treibladung (2) und einem Gehäuse (3), wobei die elektrische Anbindung der Anzündeinheit (1) an ein übergeordnetes Gerät über Kontaktelemente erfolgt, die am heckseitigen Ende (4) aus der Anzündeinheit (1) herausgeführt sind, wobei erfindungsgemäß vorgesehen ist, dass auf dem heckseitigen Ende (4) der Anzündeinheit (1) und/oder Gasgenerators ein Anschlusselement (5) aufgebracht ist, welches an seinem der Anzündeinheit (1) abgewandten Seite eine Anschlussschnittstelle (6) in Form einer Steckerbuchse aufweist, die mit Kontaktelementen zur elektrischen Verbindung versehen ist.

## Beschreibung

Die Erfindung betrifft einen Gasgenerator mit einer Anzündeinheit, einer Treibladung und einem Gehäuse, wobei die elektrische Anbindung der Anzündeinheit an ein übergeordnetes Gerät über Kontaktelemente erfolgt, die am heckseitigen Ende aus der Anzündeinheit herausgeführt sind.

Derartige Gasgeneratoren erzeugen nach Initiierung ein Druckgas, welches zum Beispiel einen Airbag aufbläst oder ein Rückhaltesystem, wie einen Gurtstraffer in einem Kraftfahrzeug betätigt.

Die elektrische Anbindung des Gasgenerators bzw. dessen Anzündeinheit an ein übergeordnetes Gerät, erfolgt nach dem Stand der Technik auf zwei Varianten, nämlich der lead wire Variante oder der Pintyp Variante.

Bei der lead-wire-Variante werden die elektrischen Anschlüsse, vorzugsweise Leitungsmaterial wie Kabel, aus dem Gasgenerator herausgeführt und die Kontaktierung zum Fahrzeugkabelsatz bzw. Steuergerät erfolgt an einer anderweitig platzierten Stelle im Fahrzeug.

Bei der Pintyp-Variante sind die elektrischen Anschlüsse vorzugsweise massive Kontaktelemente, wie Kontaktstifte, welche direkt am Gasgenerator mit dem fahrzeugseitigen Steckverbinder kontaktiert werden. Die Schnittstelle (Buchse) zur Aufnahme des Steckverbinders ist daher direkt in den Gasgenerator integriert.

Diese Pintypversionen werden vorzugsweise mit der sogenannten VDA 11mm Schnittstelle ausgeführt, wobei in die Buchse kundenspezifische Codiereinsätze montiert werden.

Diese Codiereinsätze, auch Retainer genannt, weisen oft auch eine Kurzschlussbrücke als ESD-Schutz (elektrostatische Entladung) auf. Dies ist beschrieben zum Beispiel in der DE 102 02 920 B4.

Ein Nachteil dieser Pintypversionen ist die hohe Bauteileanzahl, schließlich muss zum Beispiel für unterschiedliche Codiereinsätze ein spezieller Gasgenerator gefertigt werden.

Der Erfindung liegt daher die Aufgabe zu Grunde, einen Gasgenerator so zu verbessern, dass die benötigte Anzahl an Bauteilen bzw. Gasgeneratorvarianten reduziert ist. Zusätzlich soll durch höhere Integration eine Miniaturisierung erreicht werden.

Diese Aufgabe ist durch die Merkmale des Anspruchs 1 gelöst.

Erfindungsgemäß ist vorgesehen, dass auf dem heckseitigen Ende der Anzündeinheit und/oder Gasgenerators ein Anschlusselement aufgebracht ist, welches an seinem der Anzündeinheit abgewandten Seite eine Anschlussschnittstelle in Form einer Steckerbuchse aufweist, die mit Kontaktelementen zur elektrischen Verbindung versehen ist. Dadurch, dass auf dem heckseitigen Ende der Anzündeinheit und/oder Gasgenerators selber ein Anschlusselement aufgebracht ist, welches an seinem der Anzündeinheit abgewandten Seite eine Anschlussschnittstelle in Form einer Steckerbuchse aufweist, die mit den Kontaktelementen elektrisch verbunden ist, ist die benötigte Anzahl an Bauteilen bzw. Gasgeneratorvarianten reduziert. Außerdem ist durch eine höhere Integration eine Miniaturisierung erreicht.

In bevorzugter Ausführungsform ist das Anschlusselement an die äußere Geometrie der Anzündeinheit und/oder des Gasgenerators angepasst. Zum Beispiel bietet es sich an, dass das Anschlusselement mit der Anzündeinheit fluchtet, d.h. den gleichen Außendurchmesser aufweist.

Die Anschlussschnittstelle bzw. die Steckerbuchse enthält mindestens einen Codiereinsatz und/oder eine Steckerverriegelung und/oder eine Kurzschlussbrücke. Steckerverriegelungen und Kurzschlussbrücken sind in der DE 102 02 920 B4 beschrieben.

Vorteilhaft weist das Anschlusselement eine Umhüllung aus einem Kunststoff auf, wobei sich ein Duroplast wegen seiner Eigenschaften für diesen Anwendungsfall, beispielsweise wegen seiner Materialeigenschaften (wie Festigkeit, Temperaturbeständigkeit und dergleichen) besonders eignet.

Das Anschlusselement ist auf der Anzündeinheit bevorzugt über eine Schnappverbindung befestigt, oder es ist auf der Anzündeinheit aufgepresst ist oder es ist auf die Anzündeinheit aufgespritzt.

In Weiterbildung der Erfindung weist das Anschlusselement auf seiner Außenwand einen umlaufenden radial erweiterten Abstützkragen zur Verankerung des Gasgenerators in einem übergeordneten Gehäuse auf. Ein übergeordnetes Gehäuse wäre zum Beispiel ein Gurtstraffergehäuse, welches zur Verankerung den Abstützkragen umgreift. So kann die Geometrie des Anschlusselements eine wichtige Abstützfunktion übernehmen.

Als Verwendung des erfindungsgemäßen Gasgenerators bietet sich vorteilhaft ein Rückhaltesystem, insbesondere in einem Kraftfahrzeug an. Das Rückhaltesystem ist bevorzugt ein Insassenrückhaltesystem wie zum Beispiel ein Gurtstraffer.

Weitere vorteilhafte Ausgestaltungen der Erfindung, auf die diese jedoch nicht beschränkt ist, sind der Zeichnungsbeschreibung zu entnehmen, in der ein Ausführungsbeispiel der Erfindung näher beschrieben ist.

Es zeigen:
- Figur 1:: einen erfindungsgemäßen Gasgenerator in der Ausbildung als Microgasgenerator,
- Figur 2:: die Anzündeinheit mit aufgebrachtem Anschlusselement,
- Figur 3:: das heckseitige Ende der Anzündeinheit mit aufgebrachtem Anschlusselement,
- Figur 4:: eine Ansicht der Anschlussschnittstelle in Axialrichtung mit der Kurzschlussbrücke,
- Figur 5:: die Verankerung des Gasgenerators zum Beispiel in einem übergeordneten Gehäuse wie einem Gurtstraffergehäuse.

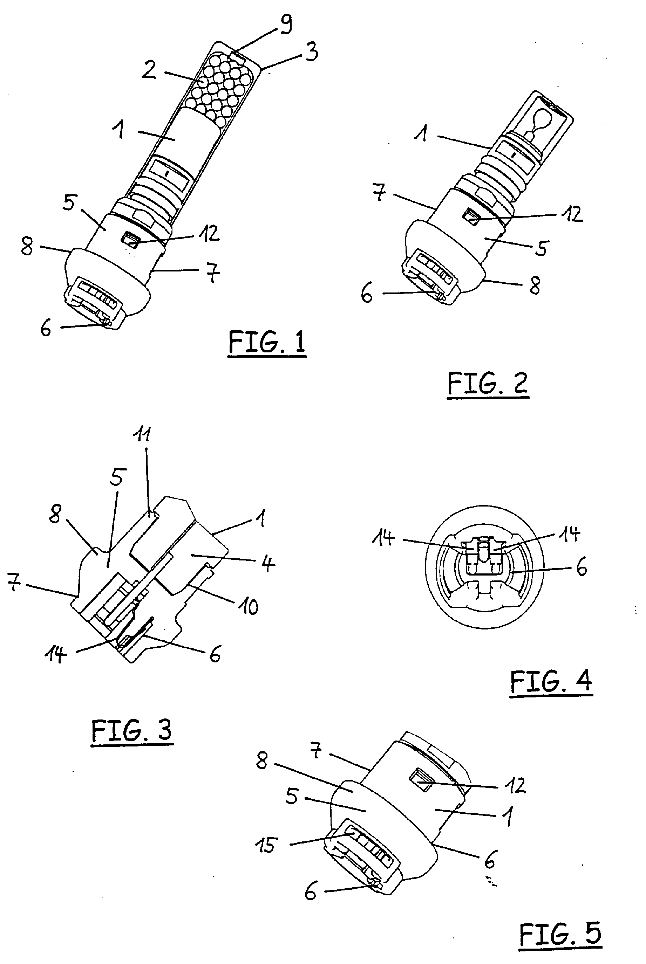

Die Figur 1 zeigt einen erfindungsgemäßen Gasgenerator in der Ausbildung als Microgasgenerator.

In einem hülsenförmigen Gehäuse 3 befindet sich eine Treibladung 2, die nach Anzündung ein Treibgas erzeugt, welches zum Beispiel einen Gurtstraffer in einem Rückhaltesystem eines Kraftfahrzeugs betätigt. Das Treibgas kann hierzu eine Sollbruchstelle 9 des Gehäuses 3 aufbrechen, muß es aber nicht.

Angrenzend an die Treibladung 2 ist eine Anzündeinheit 1 in das Gehäuse 3 eingeschoben. Diese Anzündeinheit 1 enthält zum Beispiel eine Zündpille, die elektrisch zündbar ist. Nach Zündung der Zündpille entwickeln sich Anzündgase, welche die Treibladung 2 anzünden.

Die zur Zündung der Zündpille erforderliche elektrische Anbindung erfolgt in der hier angewandten Pintyp-Variante über bevorzugt massive elektrisch leitende Kontaktstifte, die am heckseitigen Ende 4 der Anzündeinheit 1 aus dieser herausgeführt sind.

Zum Anschluss eines Steckers ist auf dem heckseitigen Ende 4 der Anzündeinheit 1 ein Anschlusselement 5 aufgebracht ist, welches an seinem der Anzündeinheit 1 abgewandten Seite eine Anschlussschnittstelle 6 in Form einer Steckerbuchse aufweist, die mit den Kontaktstiften oder allgemein Kontaktelementen elektrisch verbunden ist.

Figur 2 zeigt allein die Anzündeinheit 1 mit aufgebrachtem Anschlusselement 5.

Figur 3 zeigt das heckseitige Ende 4 der Anzündeinheit 1 mit aufgebrachtem Anschlusselement 5. Das heckseitige Ende 4 weist hierzu eine Umfangsreduzierung 10 auf, die vom Anschlusselement 5 umgriffen ist. Das Anschlusselement 5 weist hierzu einen zylinderförmigen Kragen 11 auf, der auf die Umfangsreduzierung 10 des heckseitigen Endes 4 der Anzündeinheit 1 aufgeschoben ist.

Die Befestigung des Anschlusselements 5 auf der Anzündeinheit 1 kann auf verschiedene Arten erfolgen, zum Beispiel durch Aufpressen, Aufspritzen oder in der hier gezeigten Ausführungsform über eine Schnappverbindung 12.

Die äußere Umhüllung 7 des Anschlusselements 5 ist bevorzugt ein Kunststoff, wobei sich Duroplaste als besonders geeignet erweisen.

Die Anschlussschnittstelle 6, d.h. die Buchse zur Aufnahme eines Anschlusssteckers enthält alle notwendigen Vorrichtungen, wie einen Codiereinsatz und/oder eine Steckerverriegelung 15 und/oder eine Kurzschlussbrücke 16. Figur 4 zeigt eine Ansicht der Anschlussschnittstelle 6 in Axialrichtung mit der Kurzschlussbrücke 14.

Wie an der Figur 3 besonders gut erkennbar ist, ist das Anschlusselement 5 an die äußere Geometrie der Anzündeinheit 1 und/oder des Gasgenerators angepasst.

Zur Verankerung des Gasgenerators zum Beispiel in einem übergeordneten Gehäuse wie einem Gurtstraffergehäuse 13 (siehe Figur 5) weist das Anschlusselement 5 auf seiner Außenwand einen umlaufenden radial erweiterten Abstützkragen 8 auf. Das Gurtstraffergehäuse 13 umgreift dabei den Abstützkragen 8, wodurch eine Verankerung erreicht ist.

### Bezugszeichenliste:

- 1.: Anzündeinheit
- 2.: Treibladung
- 3.: Gehäuse
- 4.: Heckseitiges Ende der Anzündeinheit
- 5.: Anschlusselement
- 6.: Anschlussschnittstelle
- 7.: Umhüllung
- 8.: Abstützkragen
- 9.: Sollbruchstelle
- 10.: Umfangsreduzierung
- 11.: Kragen
- 12.: Schnappverbindung
- 13.: Gurtstraffergehäuse
- 14.: Kurzschlussbrücke
- 15.: Steckerverriegelung

## Patentansprüche

1. Gasgenerator mit einer Anzündeinheit (1), einer Treibladung (2) und einem Gehäuse (3), wobei die elektrische Anbindung der Anzündeinheit (1) an ein übergeordnetes Gerät über Kontaktelemente erfolgt, die am heckseitigen Ende (4) aus der Anzündeinheit (1) herausgeführt sind, **dadurch gekennzeichnet, dass** auf dem heckseitigen Ende (4) der Anzündeinheit (1) und/oder Gasgenerators ein Anschlusselement (5) aufgebracht ist, welches an seinem der Anzündeinheit (1) abgewandten Seite eine Anschlussschnittstelle (6) in Form einer Steckerbuchse aufweist, die mit Kontaktelementen zur elektrischen Verbindung versehen ist.

2. Gasgenerator nach Anspruch 1, **dadurch gekennzeichnet, dass** das Anschlusselement (5) an die äußere Geometrie der Anzündeinheit (1) und/oder des Gasgenerators so angepasst ist, dass von dem Anschlußelement (5) eine Abstützfunktion (8) für den Gasgenerator zum übergeordneten Gerät übernommen wird.

3. Gasgenerator nach Anspruch 1 oder 2, **dadurch gekennzeichnet, dass** die Anschlussschnittstelle (6) eine Codierung, insbesondere ausgebildet als ein Codiereinsatz, und/oder eine Steckerverriegelung (15) und/oder eine Kurzschlussbrücke (14) enthält.

4. Gasgenerator nach einem der Ansprüche 1 bis 3, **dadurch gekennzeichnet, dass** das Anschlusselement (5) eine Umhüllung (7) aus einem Kunststoff aufweist und/oder aus einem Kunststoff besteht.

5. Gasgenerator nach Anspruch 4, **dadurch gekennzeichnet, dass** der Kunststoff ein Duroplast ist.

6. Gasgenerator nach einem der Ansprüche 1 bis 5, **dadurch gekennzeichnet, dass** das Anschlusselement (5) auf der Anzündeinheit (1) über eine Schnappverbindung (12) befestigt ist.

7. Gasgenerator nach einem der Ansprüche 1 bis 5, **dadurch gekennzeichnet, dass** das Anschlusselement (5) auf der Anzündeinheit (1) aufgepresst ist.

8. Gasgenerator nach einem der Ansprüche 1 bis 5, **dadurch gekennzeichnet, dass** das Anschlusselement (5) auf die Anzündeinheit (1) aufgespritzt ist.

9. Gasgenerator nach einem der Ansprüche 1 bis 8, **dadurch gekennzeichnet, dass** das Anschlusselement (5) auf seiner Außenwand einen umlaufenden radial erweiterten Abstützkragen (8) zur Verankerung des Gasgenerators in einem übergeordneten Gehäuse aufweist.

10. Gasgenerator nach einem der vorhergehenden Ansprüche zur Verwendung in einem Rückhaltesystem, insbesondere in einem Kraftfahrzeug.

11. Gasgenerator nach einem der vorhergehenden Ansprüche, **dadurch gekennzeichnet, dass** das Anschlusselement (5) auf der Anschlussschnittstellen abgewandten Seite eine radial umlaufenden Rippe aufweist, welche sich durch den generierten Druck des Gasgenerators in dem übergeordneten System in die Zünderumspritzung, insbesondere die Umhüllung (7), drückt und somit eine Dichtfunktion übernimmt.
